# EUROPEAN PATENT APPLICATION

(11) **EP 4 285 741 A1**
(43) Date of publication of application: **06.12.2023**
(21) Application number: 23174304.8
(22) Date of filing: 19.05.2023
(51) Int. Cl.: A23L 27/60, A23D 7/00, A23D 7/005, A23D 7/05, A23D 7/01

(54) **METHOD FOR THE PREPARATION OF A CONDIMENT IN THE FORM OF AN OIL-IN-WATER EMULSION**

(30) Priority: 03.06.2022 BE 202205433
(71) Applicant: GB Foods Belgium, 2870 Puurs, Sint-Amands (BE)
(72) Inventor: DEKKER, Ben, 2870 Puurs, Sint-Amands (BE)
(74) Representative: Nederlandsch Octrooibureau

(57) **Abstract**

The invention relates to a method for the preparation of a condiment in the form of an oil-in-water emulsion containing water, an emulsifier and a plant-based oil involving combining the necessary ingredients into a pre-emulsion followed by the emulsification of the pre-emulsion into the condiment, wherein the temperature of the pre-emulsion at the start of the emulsification step (iii) is less than 14°C.

## Description

### Area of the invention

The invention relates to a method for the preparation of a condiment in the form of an oil-in-water emulsion containing water, an emulsifier and a plant-based oil

### Background of the technology

Condiments, such as mayonnaise, are known food products that exist in the form of an oil-in-water emulsion that is sufficiently stable to produce, transport and consume the condiment. During the production of mayonnaise, a so-called catastrophic phase-inversion may occur, wherein a water-in-oil emulsion is formed that is not mayonnaise, also called "broken mayonnaise". This has a very low viscosity and a color different from mayonnaise and may not be consumed.

Mayonnaise typically has a base consisting of water, lecithin and vegetable oil, supplemented by sweeteners such as sugar (saccharose), table salt, vinegar and mustard.

US2021329955A1 publishes sprayable salad dressings with an oil content of 1-25 weight% and a viscosity of typically 100-7000 mPa·s.

US2012164276A1 publishes bound salads a glucomannan-based dressing with an oil content of 0.5-90 weight% and a viscosity of 30,000-220,000 mPa·s.

The production of condiments such as mayonnaise involves the combining of the ingredients followed by an emulsification step performed with a device that causes high shear force (also called a homogenizer), such as a high shear mixer or colloid mill.

A colloid mill is known to the professional as a device that has an inlet and outlet, between which a conical stator and conical rotor are placed such that there is a narrow slit between the stator and rotor through which the product must migrate from the inlet to the outlet. The product is subjected to great shear force in the slit between the rotor and stator, which causes emulsification. Typically the surfaces of the stator and rotor that face each other are equipped with small openings in connection with the slit between the rotor and stator.

The efficient emulsification of a product in a homogenizer such as a colloid mill requires sufficient reduction of the drop size without overheating the product or otherwise damaging the raw materials.

Some markets demand extremely viscous condiments (such as mayonnaise). The maximum viscosity achievable for a certain condiment is determined on the one hand by the composition of the condiment, and on the other by the limitations of the homogenizer. A homogenizer has inherent limitations that delineate a certain operational range with regard to energy consumption, rotor-stator distance, overheating, product degradation, etc.

It is one objective of the invention to provide an alternative or improved method for the production of a condiment that allows for the production of a condiment with high viscosity. It is an objective of the invention to provide a method for producing a condiment with a high viscosity with little or no product degradation. In particular, there is a goal to provide such a method that can be easily implemented without the need for special equipment or ingredients.

### Summary of the invention

The inventors have found that one or more objectives of the invention can be achieved by a method for producing the condiment comprising the preparation of a pre-emulsion followed by the emulsification of the pre-emulsion, wherein the temperature of the pre-emulsion at the start of the emulsification step is less than 14°C. It has been found that the cooling of the ingredients and/or pre-emulsion takes place before the emulsification step leads to an astonishing, significant and stable increase of the viscosity. As will be shown in the examples, the viscosity (measured at the same temperature) is significantly increased for a condiment with a lower pre-emulsion temperature but otherwise identically produced. The method according to the current invention allows for the production of condiments (such as mayonnaise) outside of the normal operational range of the homogenizer without additional ingredients or special equipment being needed. Indeed, this method allows for increasing the viscosity even more, even after the minimum setting for the rotor-stator distance of a colloid mill has been achieved.

Thus, in a first aspect, the invention relates to a method for preparing a condiment in the form of an oil-in-water emulsion comprising the following steps:
(i) combining at least:
   a. water;
   b. an emulsifier, preferably an emulsifier containing lecithin;
   c. a vegetable oil containing soybean oil; and
   d. optionally one or more ingredients chosen from a sweetener, table salt, an acidic component and mustard;
   into a first mixture;
(ii) processing the first mixture into a pre-emulsion; and
(iii) emulsifying the pre-emulsion into the condiment;
wherein the temperature of the pre-emulsion at the start of the emulsification step (iii) is less than 14°C.

In one embodiment that is highly preferred, the method as described herein is used, wherein processing step (ii) is performed with a pump and wherein the emulsification of step (iii) is performed with a colloid mill.

Preferably, the method also involves the following step:
(iv) pumping the condiment to a filling station and the filling of the condiment into a container, preferably a glass or plastic container.

Preferably, the viscosity of the condiment after the emulsification step (iii) is in the range of 340,000 - 420,000 mPa·s, preferably within the range of 360,000 - 400,000 mPa·s and the viscosity of the condiment in the container after step (iv) is in the range of 260,000 - 300,000 mPa·s, preferably within the range of 270,000-280,000 mPa·s, even more preferred within the range of 275,000-285,000 mPa·s.

### Summary description of the drawings

The invention is further explained using the drawings enclosed.

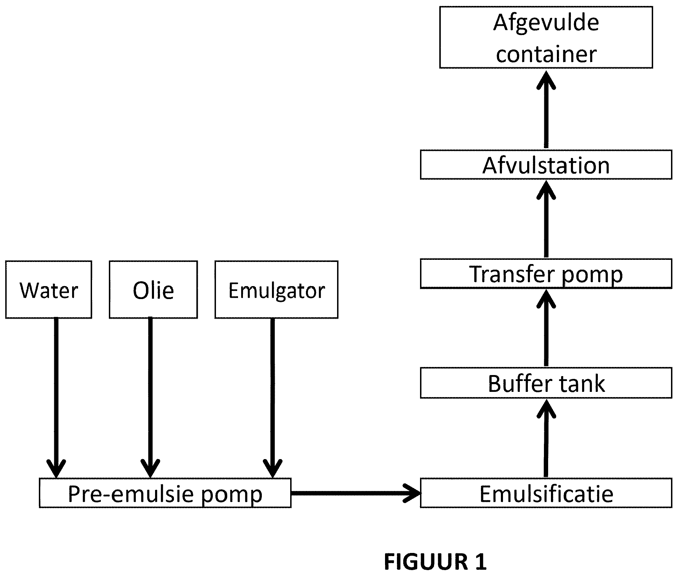

Fig. 1 is a schematic representation of an embodiment of the method according to the invention.

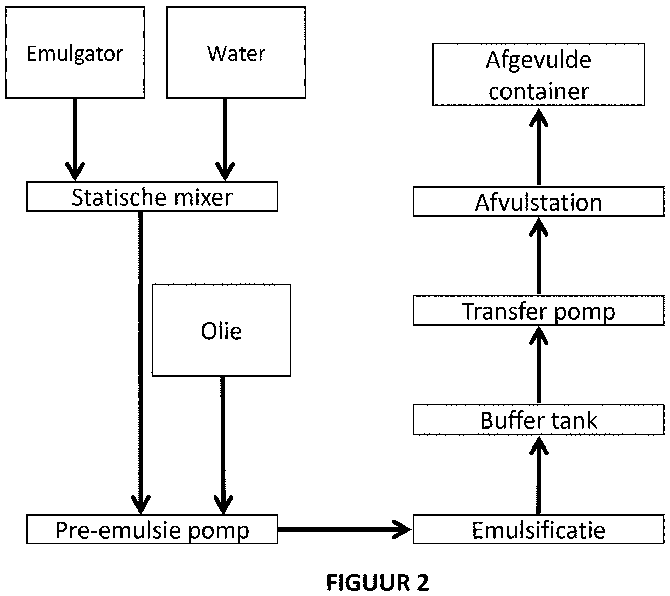

Fig. 2 is a schematic representation of an embodiment of the method according to the invention comprising combining water with the emulsifier and one or more optional ingredients with a static in-line mixer.

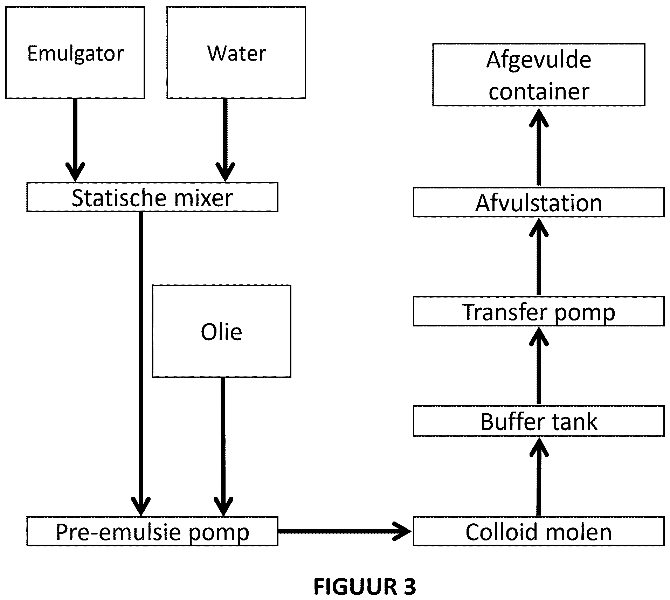

Fig. 3 is a schematic representation of an embodiment of the method according to the invention comprising combining water with the emulsifier and one or more optional ingredients with a static in-line mixer and the use of a colloid mill for the emulsification of the pre-emulsion into a condiment.

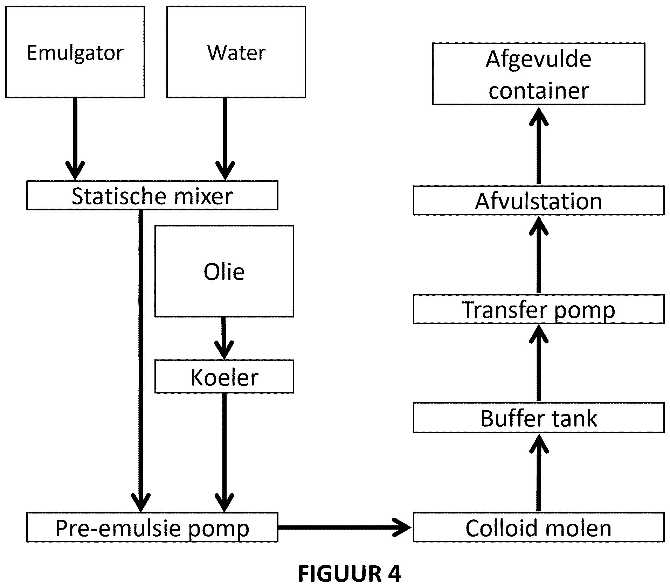

Fig. 4 is a schematic representation of an embodiment of the method according to the invention comprising combining water with the emulsifier and one or more optional ingredients with a static in-line mixer and the use of a colloid mill for the emulsification of the pre-emulsion into a condiment, wherein the oil is cooled before being mixed with the water phase into a pre-emulsion.

### Description of the embodiments

Within the context of the current patent application, the terms "contain" or "include" are used to mean that at least the listed steps, components or properties are present, but that additional steps, components or properties not explicitly listed are not ruled out, unless otherwise defined.

Within the context of the present patent application, the term "oil-in-water emulsion" means a mixture wherein oil is dispersed into a continual water phase.

Within the context of the present patent application, the term "vegetable oil" means any vegetable-based oil, regardless of melting point (unless explicitly defined). The term "vegetable oil" thus refers to a plant-based oil that is partially or completely solid at room temperature (sometimes called "vegetable fat").

Within the context of the present patent application, the term "hermetically sealed" means that the food product is packed in a container that is sealed against air and moisture. Thus, as long as the container is intact, the food product is protected from drying out and contamination or spoilage through bacteria, molds, yeasts, dust, etc.

Within the context of the present patent application, when the quantity of water of the condiment is indicated, the total quantity is meant regardless of the source of the water. For example, if the condiment is mayonnaise, this will typically include an acidic component such as vinegar, so that the total quantity of water in the condiment originates from combining water and vinegar.

If in the present patent application there is a reference to viscosity, this means the viscosity as measured with a Brookfield Ametek DV2T equipped with a Helipath^{™} standard T-bar D94 accessory measured at 18°C and at 2 rpm for 2 minutes. A Helipath^{™} standard ensure that the viscometer can move slowly up or down, wherein the T-bar accessory describes a helical path through the material to be measured. In that way, channel formation or division during meeting is prevented.

The current invention will be described with regard to particular embodiments, but the invention is not limited to these and is only determined by the claims. In addition, the terms first, second, third and the like are used in the description and conclusions to differentiate between similar elements and not necessarily to describe a sequential or chronological sequence. The terms are interchangeable under fitting circumstances and the embodiments of the invention can be applied in sequences other than those described or illustrated here. Furthermore, the various embodiments, even though called "preferred embodiments", must be considered rather as a manner of example of how the invention can be designed than as a limitation of the range of the invention. In particular, the inventors explicitly provide that every embodiment can be combined with one or more other embodiments, unless from the context it appears that the combination is *contradictio in terminis.*

in a first aspect, the invention relates to a method for preparing a condiment in the form of an oil-in-water emulsion comprising the following steps:
(i) combining at least:
   a. water;
   b. an emulsifier, preferably an emulsifier containing lecithin;
   c. a vegetable oil containing soybean oil; and
   d. optionally one or more ingredients chosen from a sweetener, table salt, an acidic component and mustard;
   into a first mixture;
(ii) processing the first mixture into a pre-emulsion; and
(iii) emulsifying the pre-emulsion into the condiment;
wherein the temperature of the pre-emulsion at the start of the emulsification step (iii) is less than 14°C.

In the method according to the invention, the vegetable oil in step (i) is in a liquid state. Thus, in the method according to the invention, the vegetable oil in step (i) is supplied at a temperature above the melting point of the vegetable oil so that the vegetable oil can be supplied in a liquid state. In addition, the preference is that the vegetable oil in step (i) is supplied at a temperature above the "cloud point" of the oil. For example, if the vegetable oil consists of soybean oil (consistent with the preferential embodiments described elsewhere here), the vegetable oil is supplied at a temperature of at least 9°C, preferably at least 10°C.

Combining at least the water, the emulsifier and the vegetable oil in step (i) of the method to a mixture may take place in any way suitable for combining the ingredients. In one embodiment of the method according to the invention, the combination in step (i) takes place through the combining of an aqueous stream of at least water and an emulsifier with the vegetable oil containing soybean oil. If one or more of the optional ingredients are used as described elsewhere, these are preferably included in the aqueous flow. Combining water with the emulsifier and one or more optional ingredients takes place preferably using a static in-line mixer. Typically this happens without active mixing with e.g. a rotor-stator mixer considering that the intensive mixing takes place in step (ii) together with the oil to form a partial emulsion.

The vegetable oil containing soybean oil is a vegetable oil consisting of soybean oil and optionally one or more vegetable oils, such as one or more vegetable oils chosen from among rapeseed oil, sunflower oil, soybean oil, corn oil, rice oil, sesame oil, cotton seed oil, safflower oil, linseed oil, olive oil, peanut oil, grape seed oil, macadamia oil, walnut oil, tea seed oil, wheat bran oil and combinations thereof. The vegetable oil is preferably liquid at 10°C. IN a preferred embodiment of the method according to the invention the vegetable oil consists of at least 50% by weight (based on the total quantity of the vegetable oil) soybean oil, more preferably of at least 80% by weight (based on the total quantity of the vegetable oil) of soybean oil, more preferably of at least 90% by weight (based on the total quantity of the vegetable oil) of soybean oil. Typically, the quantity of soybean oil is at least 94% by weight (based on the total quantity of the vegetable oil) of soybean oil, more preferably of at least 96% by weight (based on the total quantity of the vegetable oil) of soybean oil or least 98% by weight (based on the total quantity of the vegetable oil) of soybean oil. In one embodiment of high preference of the method according to the invention, the vegetable oil consists of soybean oil.

The professional will understand that the vegetable oil is a first and necessary fat in the oil-in-water emulsion according to the invention, but that the food product may contain one or more additional fats, such as in the form of animal fats. Nevertheless, an embodiment of high preference of the method according to the invention, the vegetable oil is the only fat in the condiment and the condiment is free of animal fats. As described herein, the vegetable oil preferably consists of soybean oil, so that in some embodiments, soybean oil is the only fat in the condiment.

In one embodiment of the method according to the invention, the condiment contains at least 65% by weight (based on the total quantity of the condiment) of vegetable oil and at least 5% by weight (based on the total quantity of the condiment) of water, preferably at least 75% by weight (based on the total quantity of the condiment) of vegetable oil and at least 7% by weight (based on the total quantity of the condiment) of water. In one embodiment of high preference of the method according to the invention, the condiment consists of 75-85% (based on the total quantity of the condiment) of vegetable oil, preferably at least 78-82% by weight (based on the total quantity of the condiment) of vegetable oil and 13-23% by weight (based on the total quantity of the condiment) of water. The quantity of water that is added (thus not included in other ingredients such as vinegar or egg yolk) is preferably 4-18% by weight (based on the total quantity of the condiment), preferably at least 5-16.5% by weight, most preferably 11-14% by weight (based on the total quantity of the condiment). The vegetable oil preferably consists of at least 50% by weight (based on the total quantity of the vegetable oil) of soybean oil, as described here elsewhere. Thus, the professional will, for example, understand that in some embodiments the condiment contains at least 65% by weight (based on the total quantity of the condiment) of vegetable oil and at least 5% by weight (based on the total quantity of the condiment) of vegetable oil, wherein the vegetable oil makes up at least 50% by weight (based on the total quantity of the vegetable oil) of soybean oil. For example, in some embodiments, the condiment contains at least 75-85% by weight (based on the total quantity of the condiment) of vegetable oil, preferably at least 78-82% by weight (based on the total quantity of the condiment) of vegetable oil and 13-23% by weight (based on the total quantity of the condiment) of water, wherein the vegetable oil makes up at least 80% by weight (based on the total quantity of the vegetable oil) of soybean oil, preferably of at least 90% by weight of soybean oil. The quantity of water is preferably 13-23% by weight (based on the total quantity of the condiment). The quantity of water that is added (thus not included in other ingredients such as vinegar or egg yolk) is preferably 4-18% by weight (based on the total quantity of the condiment), preferably at least 5-16.5% by weight, most preferably 11-14% by weight (based on the total quantity of the condiment).

In one embodiment of the method according to the invention, the condiment contains at least 65% by weight (based on the total quantity of the condiment) of soybean oil and at least 5% by weight (based on the total quantity of the condiment) of water, preferably at least 75% by weight (based on the total quantity of the condiment) of soybean oil and at least 7% by weight (based on the total quantity of the condiment) of water. In one embodiment of high preference of the method according to the invention, the condiment consists of 75-85% (based on the total quantity of the condiment) of soybean oil, preferably at least 78-82% by weight (based on the total quantity of the condiment) of soybean oil and 13-23% by weight (based on the total quantity of the condiment) of water. The quantity of water that is added (thus not included in other ingredients such as vinegar or egg yolk) is preferably 4-18% by weight (based on the total quantity of the condiment), preferably at least 5-16.5% by weight, most preferably 11-14% by weight (based on the total quantity of the condiment). In this embodiment, the most preferable is at least 80% by weight (based on the total quantity of the vegetable oil) of the vegetable oil in the condiment is soybean oil, preferably of at least 90% by weight of (based on the total quantity of the vegetable oil) of the vegetable oil in the condiment is soybean oil. Typically and with a high preference, soybean oil is the only fat in the condiment, and the condiment is free from other animal or vegetable fats.

In one embodiment of the method according to the invention the condiment is mayonnaise. These embodiments enjoy a high preference and the method involves by preference a method for the preparation of mayonnaise. Preferably, the method also includes combining the typical ingredients of mayonnaise.

In embodiments, the method according to the invention has step (i) combining at least:
a. water;
b. an emulsifier;
c. a vegetable oil containing soybean oil as described here elsewhere, preferably soybean oil; and
d. a sweetener, table salt, an acidic component and optionally, mustard.
Preferably, step (i) involves the combining of at least:
a. water;
b. an emulsifier;
c. a vegetable oil containing soybean oil as described here elsewhere, preferably soybean oil; and
d. a sweetener, table salt, vinegar and optionally, mustard.
Even more preferably, step (i) involves the combining of at least:
a. water;
b. an emulsifier;
c. a vegetable oil containing soybean oil as described here elsewhere, preferably soybean oil; and
d. saccharose, table salt, vinegar and optionally, mustard.

The emulsifier can be any suitable emulsifier known by the professional, preferably the emulsifier contains a bond of the group formed by lecithin, polysorbate, sorbitan monolaurate (E493), castor oil ("wonder oil") of ethoxylates thereof, sucrose fatty acid esters, and combinations thereof.

In particular, the method according to the invention has step (i) combining at least:
a. water;
b. lecithin:
c. a vegetable oil containing soybean oil as described here elsewhere, preferably soybean oil; and
d. a sweetener, table salt, an acidic component and optionally, mustard.
Preferably, step (i) involves the combining of at least:
a. water;
b. lecithin:
c. a vegetable oil containing soybean oil as described here elsewhere, preferably soybean oil; and
d. a sweetener, table salt, vinegar and optionally, mustard.
Preferably, step (i) involves the combining of at least:
a. water;
b. lecithin:
c. a vegetable oil containing soybean oil as described here elsewhere, preferably soybean oil; and
d. saccharose, table salt, vinegar and optionally, mustard.

In some embodiments the method according to the invention provides for the preparation of mayonnaise, wherein step (i) consists of combining:
a. water;
b. lecithin:
c. a vegetable oil containing soybean oil as described here elsewhere, preferably soybean oil; and
d. a sweetener, table salt, an acidic component and optionally, mustard;
and the condiment contains less than 5% by weight (based on the total quantity of the condiment) of other ingredients, more preferably less than 1% by weight (based on the total quantity of the condiment).
Preferably, step (i) consists of combining:
a. water;
b. lecithin:
c. a vegetable oil containing soybean oil as described here elsewhere, preferably soybean oil; and
d. a sweetener, table salt, vinegar and optionally, mustard;
and the condiment contains less than 5% by weight (based on the total quantity of the condiment) of other ingredients, more preferably less than 1% by weight (based on the total quantity of the condiment).
More preferably, step (i) consists of combining:
a. water;
b. lecithin:
c. a vegetable oil containing soybean oil as described here elsewhere, preferably soybean oil; and
d. saccharose, table salt, vinegar and optionally, mustard;
and the condiment contains less than 5% by weight (based on the total quantity of the condiment) of other ingredients, more preferably less than 1% by weight (based on the total quantity of the condiment).

Lecithin is a known emulsifier that naturally occurs in egg. As previously described in the document, the emulsifier contains, by high preference, lecithin. In one embodiment of the method according to the invention the emulsifier contains lecithin and the lecithin is supplied in the form of egg yolk, egg yolk powder or whole egg. Preferably, the lecithin is supplied in the form of egg yolk.

In a preferred embodiment of the method according to the invention, the emulsifier contains lecithin and the lecithin is provided in the form of egg yolk, wherein the weight ratio of soybean oil:egg yolk falls within the range of 8:1-12:1, preferably within the range of 9:1-11:1, even more preferably within the range of 9.5:1-10.5:1. The weight ratio is typically about 10:1. The weight ratio of soybean oil:egg yolk is determined based on the total quantity of soybean oil and egg yolk used in the condiment.

In one embodiment of the method according to the invention, the condiment also contains a second emulsifier or a thickening agent chosen from the group consisting of starch and its derivatives, cellulose and its derivatives, pectin, inulin and gum or combinations thereof. The starch and its derivatives may be native starch, physically modified starch, chemically modified starch or combinations thereof, preferably chemically modified starch. Examples of suitable starch derivatives are, acid-treated starch (E1401), alkali-treated starch (E1402), bleached starch (E1403), oxidized starch (E1404), monostarch phosphate (E1410), distarch glycerol (E1411), distarch phosphate (E1412), phosphatized distarch phosphate (E1413), acetylated distarch phosphate (E1414), acetylated starch (E1420), acetylated distarch adipate (E1422), acetylated distarch glycerol (E1423), hydroxypropyl starch (E1440), hydroxypropyl distarch glycerol (E1441), hydroxypropyl distarch phosphate (E1442), acetylated oxidized starch (E1451), starch sodium octenyl succinate (E1450), starch aluminum octenyl succinate (E1452) and combinations thereof. The origin of the starch or derivative thereof is not particularly limited, and can, for example, be starch or starch derivatives originating from corn, potato, tapioca, rice, peas or combinations thereof. Suitable cellulose derivatives are cellulose ethers such as methyl cellulose (E461), ethyl cellulose (E462), ethyl methyl cellulose (E465), hydroxyethyl cellulose, hydroxypropyl cellulose (E463), hydroxyethyl methyl cellulose, hydroxypropyl methyl cellulose (E464), ethyl hydroxyethyl cellulose (E467), carboxymethyl cellulose (E446) and combinations thereof. Suitable gums are alginic acid (E400), sodium alginate (E401), potassium alginate (E402), ammonia alginate (E403), calcium alginate (E404), propylene glycol alginate (E405), agar (E406), carrageenan (E407), carob seed flour (E410), guar gum (E412), tragacanth gum (E413), gum Arabic (E414), xanthan gum (E415), Karaya gum (E416), Gellan gum (E418) and combinations thereof.

The sweetener can be any known sweetener such as syrups, saccharose, glucose, saccharin, aspartame, sucralose, acesulfame-K, dextrose, maltodextrin, lactose, levulose, maltose, honey, high fructose corn syrup and combinations thereof. The sweetener is preferably saccharose (also known as sucrose). In one embodiment of the method according to the invention, step (i) involves the combination with a sweetener, preferably saccharose.

The acid component can be any known food acid, such as acetic acid (such as from vinegar), citric acid (such as from lemon juice), hydrochloric acid, lactic acid, malice acid, phosphoric acid, glucuronide-delta-lactose, ascites acid, fumaric acid, tartaric acid, gluconic acid, succinic acid, adipic acid and mixtures thereof. Among the types of vinegar that can be used are red wine vinegar, distilled white vinegar, apple cider vinegar, white wine vinegar, balsamic vinegar and corn-cider vinegar. Juices containing an acidic component that can be used include lemon juice, lime juice, grapefruit juice, onion juice, onion puree, garlic juice, garlic puree, apricot puree, tomato juice and mixtures of one or more of these. In one embodiment of the method according to the invention, step (i) involves the combination with an acidic component, preferably vinegar, eve more preferably vinegar selected from white vinegar and apple cider vinegar. The amount of the acidic component in the preferred embodiments of the method according to the invention, preferably vinegar, even more preferably vinegar selected from white vinegar and/or apple cider vinegar, is such that the condiment contains in the range of 1-5% by weight (based on the total quantity of the condiment), preferably at least 2-4.5% by weight (based on the total quantity of the condiment). Free acids as determined by acid-base titration are typically within the range of 1.5 - 1.7% by weight (based on the total quantity of the condiment) most preferably at least approximately 1.6% by weight (based on the total quantity of the condiment).

In embodiment of high preference of the method according to the invention involves one or more of the following steps:
- cooling or heating the vegetable oil, preferably cooling the vegetable oil and/or
- cooling or heating the first mixture, preferably cooling the first mixture and/or
- cooling or heating the pre-emulsion, preferably cooling the pre-emulsion.
The cooling or heating reduces or increases the temperature of the vegetable oil and/or the first mixture and/or pre-emulsion by preferably at least 2°C, preferably at least 4°C. In other words, the temperature of the vegetable oil and/or the first mixture and/or pre-emulsion before cooling or heating is preferably at least 2°C, preferably at least 4°C higher, respectively lower than the temperature of the vegetable oil and/or the first mixture and/or pre-emulsion after cooling or heating. Preferably, the method involves the cooling of the vegetable oil and/or the first mixture and/or pre-emulsion, resulting in a temperature reduction of at least 2°C, preferably at least 4°C.
In some embodiments the method according to the invention involves the cooling or heating of the vegetable oil, wherein the temperature of the vegetable oil is reduced or increased by at least 4°C, preferably by at least 6°C. The inventors have found that starting with the typical environmental temperature of a production site, cooling will be necessary to achieve the desired high viscosity. Thus, in some embodiments the method according to the invention involves the cooling of the vegetable oil, wherein the temperature of the vegetable oil is reduced by at least 3°C, preferably by at least 5°C. In other words, the temperature of the vegetable oil before cooling is preferably at least 3°C higher, more preferably at least 5°C higher than the temperature of the vegetable oil after cooling.

In one preferred embodiment of the method according to the invention, the temperature of the pre-emulsion at the start of the emulsification step (iii) is less than 13°C. Preferably, the temperature at the start of the pre-emulsion at the start of the emulsification step (iii) is in the range of 8-13°C is, preferably in the range of 10-13°C, more preferably in the range of 10-12°C, and most preferably in the range of 10.5-11.5°C.

The emulsification step (iii) is performed, according to the invention, with a homogenizer such as a high-shear mixer or a colloid mill. Through the energy transfer from the homogenizer (such as the colloid mill) to the product, the temperature of the condiment at the end of the emulsification step (iii) is typically 2.5-5°C higher than the temperature of the pre-emulsion at the start at the emulsification step (iii), preferably at least 3-4°C higher.

Processing the first mixture into a pre-emulsion in step (ii) of the method according to the invention is performed with a different device than the device with which the emulsification in step (iii) is performed. Processing the first mixture into a pre-emulsion in step (ii) is a mild step that typically causes an increase in temperature of less than 1°C, preferably less than 0.5°C. In highly preferred embodiments, step (ii) is performed with a pump, such as a high-shear in-line mixer. This has the double function of the conversion of the first mixture into a pre-emulsion as well as the transport of the pre-emulsion to the homogenizer in step (iii). Such high-shear in-line mixers are available from INOXPA^{®}. Step (ii) is preferably performed with a pump, such as a high-shear in-line mixer that operates at a frequency (i.e. rotation speed) within the range of 35-70 Hz, preferably at a frequency within the range of 45-60 Hz, even more preferably at a frequency within the range of approximately 50 to approximately 55 Hz, and most preferably at a frequency from approximately 50 Hz or approximately 55 Hz.

The emulsification of step (iii) can be performed with any homogenizer known to the professional. Preferably, step (iii) is performed with a high-shear mixer or a colloid mill. Most preferably, step (iii) is performed with a colloid mill. A colloid mill is known to the professional as a device that has an inlet and outlet, between which a conical stator and conical rotor are placed such that there is a narrow slit between the stator and rotor through which the product must migrate from the inlet to the outlet. The product is subjected to great shear force in the slit between the rotor and stator, which causes emulsification. Typically the surfaces of the stator and rotor that face each other are equipped with small openings in connection with the slit between the rotor and stator. The stator can have a cooling mantle to reduce damage to the product from overheating. The rotor-stator distance is preferably set to the smallest distance possible on the settings. The rotor-stator distance is highly preferably set to within the range of 0.25-1.2 mm.

As will be shown in the examples, the method according to the present invention allows the production of a condiment with extremely high viscosity on an industrial scale in an efficient manner and without negative effects such as heat damage or catastrophic phase inversion. Therefore, with high preference, the method as described herein provides for a viscosity of the condiment after the emulsification step (iii) within the range of 340,000 - 420,000 mPa·s, preferably within the range of 360,000 - 400,000 mPa·s.

The current inventors have found that such extremely high viscosities are desirable to be able to package the condiment in a container and to achieve a packaged end product with the desired high viscosity.

Indeed, to be able to efficiently package it on a large scale, the condiment if preferably pumped to a filling station, which has a great impact on the viscosity. Thus, in a preferred embodiment, the method also involves the following step:
(iv) pumping the condiment to a filling station and the filling of the condiment into a container, preferably a glass or plastic container.

Preferably, step (iv) involves the hermetical packaging of the condiment in the container.

The viscosity of the condiment in the container is preferred to be within the range of 260,000 - 300,000 mPa·s is, preferably within the range of 270,000-280,000 mPa·s, and even more preferably within the range of 275,000-285,000 mPa·s. This extremely high viscosity of the packaged condiment is possible thanks to the method of the present invention that allows for the production of extremely high viscosities so that after pumping the condiment to the filling station, there is still sufficiently high viscosity retained. In particular, in a method according to the invention wherein the viscosity of the condiment after the emulsification step (iii) is in the range of 340,000 - 420,000 mPa·s, preferably within the range of 360,000 - 400,000 mPa·s and the viscosity of the condiment in the container after step (iv) as described elsewhere is in the range of 260,000 - 300,000 mPa·s, preferably within the range of 270,000-280,000 mPa·s, even more preferred within the range of 275,000-285,000 mPa·s. These methods are particularly useful for the production of condiments such as mayonnaise containing at least 65% by weight (based on the total quantity of the condiment) of vegetable oil, in particular soybean oil, preferably at least 80% by weight of vegetable oil, in particular soybean oil, as described here elsewhere within the context of the identity and the quantity of fats.

Step (iv) typically involves the filling of the condiment in a portion of 50-6000 grams in the container, preferably a portion of 150-2000 grams.

The method for preparing a condiment according to the present invention is particularly suitable to be performed continuously. Therefore, the method according to the current invention is preferably a method for the continuous production of a condiment. The present inventors have found that in such a continual production process, step (iii) is preferably performed with a colloid mill such as previously described. In such embodiments there is only one passage through the colloid mill to change the partial emulsion into the condiment. Without wanting to be bound to any particular theory, the present inventors believe that the conversion of the first mixture into a pre-emulsion in step (ii) in another device (such as a pump as described elsewhere) than the colloid mill makes it possible to achieve the desired high viscosity with a single passage through the colloid mill.

### Examples

Mayonnaise is continually produced with a yield of 8000 kg/hour, wherein in the first instance a water phase (with a dosing speed of 950 kg/hour) is brought together and mixed using a static inline mixer with a liquid egg yolk phase (with a dosing speed of 640 kg/hour). This mixture is then combined with soybean oil (with a dosing speed of 6410 kg/hour) and mixed into a pre-emulsion using an Inoxa High Shear mixer that operates at a frequency of 50 Hz. This pre-emulsion is then emulsified in two parallel colloid mills (single pass). The mayonnaise produced in this way (with the high viscosity) is then transferred to the holding tank. From this holding tank, the mayonnaise is pumped to a filling machine and the mayonnaise filled into consumer units (glass/plastic containers with content varying between 16 oz and 128 oz).

The recipe of the mayonnaise was as follows:

| **Ingredient** | **Quantity (% by weight)** |
|---|---|
| Oil (soybean oil) | 80 |
| Egg yolk | 8 |
| White vinegar | 2.2 |
| Wine vinegar | 1.2 |
| Sugar (saccharose) | 2 |
| Salt | 0.6 |
| Colorants and flavorings | 0.2 |
| Water | 5.8 |

The temperature of the soybean oil was 10°C.

The temperature of the pre-emulsion was 12°C.

The temperature of the mayonnaise when leaving the colloid mill was 16°C.

The soybean oil was cooled starting from the environmental temperature of 17°C.

The viscosity of the mayonnaise measured at the outlet of the colloid mill is 400,000 mPa·s.

The viscosity of the mayonnaise measured at after filling is 280,000 mPa·s.

Varying aspects of the current invention are explained in more detail in the following clauses:
1. A method for preparing a condiment in the form of an oil-in-water emulsion comprising the following steps:
   (i) combining at least:
      a. water;
      b. an emulsifier, preferably an emulsifier containing lecithin;
      c. a vegetable oil containing soybean oil; and
      d. optionally one or more ingredients chosen from a sweetener, table salt, an acidic component and mustard;
      into a first mixture;
   (ii) processing the first mixture into a pre-emulsion; and
   (iii) emulsifying the pre-emulsion into the condiment;
   wherein the temperature of the pre-emulsion at the start of the emulsification step (iii) is less than 14°C.
2. Method according to clause 1, wherein the condiment is mayonnaise.
3. Method according to clause 1 or 2, wherein step (i) involves combining at least:
   a. water;
   b. lecithin:
   c. soybean oil; and
   d. a sweetener, table salt, an acidic component and optionally, mustard; preferably a sweetener, table salt, an acidic component and optionally, mustard; even more preferably saccharose, table salt, vinegar and optionally, mustard.
4. Method according to any one of clauses 1-3 wherein the condiment contains at least 65% by weight (based on the total quantity of the condiment) of soybean oil and at least 5% by weight (based on the total quantity of the condiment) of water.
5. Method according to clause 4, wherein the condiment contains at least 75% by weight (based on the total quantity of the condiment) of soybean oil and at least 7% by weight (based on the total quantity of the condiment) of water.
6. Method according to clause 5, wherein the condiment contains 75-85% by weight (based on the total quantity of the condiment) of soybean oil, preferably at least 78-82% by weight (based on the total quantity of the condiment) of soybean oil and 13-23% by weight (based on the total quantity of the condiment) of water.
7. Method according to any one of clauses 1 - 6, wherein the emulsifier contains lecithin, and wherein the lecithin is added in the form of egg yolk, egg yolk powder or whole egg.
8. Method according to clause 7, preferably according to clause 6 and 7, wherein the lecithin is provided in the form of egg yolk.
9. Method according to clause 8, wherein the weight ratio of soybean oil:egg yolk falls within the range of 8:1-12:1, preferably within the range of 9:1- 11:1, even more preferably within the range of 9.5:1-10.5:1.
10. Method according to any one of clauses 1-9, wherein the sweetener is saccharose.
11. Method according to any one of clauses 1-10 , wherein the condiment contains a total quantity of vinegar within the range of range of 1-5% by weight (based on the total quantity of the condiment), preferably at least 2-4.5% by weight (based on the total quantity of the condiment).
12. Method according to any one of clauses 1-11 includes one or more of the following steps:
   - cooling of the vegetable oil, and/or
   - cooling of the first mixture, and/or
   - cooling of the pre-emulsion.
13. Method according to clause 12, involving the cooling of the vegetable oil, wherein the temperature of the vegetable oil is reduced by at least 4°C, preferably by at least 6°C.
14. Method according to any one of clauses 1-13, wherein the temperature of the pre-emulsion at the start of the emulsification step (iii) is less than 13°C.
15. Method according to clause 14, wherein the temperature of the pre-emulsion at the start of the emulsification step (iii) is in the range of 8-13°C is, preferably in the range of 10-13°C, more preferably in the range of 10-12°C, and most preferably in the range of 10.5-11.5°C.
16. Method according to any one of clauses 1-15, preferably according to clause 14 or 15, wherein the temperature of the condiment at the end of the emulsification step (iii) is 2.5-5 °C higher than the temperature of the pre-emulsion at the start at the emulsification step (iii), preferably 3-4 °C higher.
17. Method according to any one of clauses 1-16, wherein processing step (ii) is performed with a different device than the device with which the emulsification in step (iii) is performed.
18. Method according to clause 17, wherein processing step (ii) is performed with a pump.
19. Method according to any one of clauses 1-18, preferably according to clause 17 or 18, wherein the emulsification of step (iii) is performed with a high-shear mixer or a colloid mill, preferably with a colloid mill.
20. Method according to clause 18, wherein the colloid mill has a conical rotor and conical stator, wherein the distance between the rotor and stator is set within the range of 0.25 - 1.2 mm and/or wherein the rotation speed is set within the range of 35-70 Hz, preferably within the range 45-60 Hz.
21. Method according to any one of clauses 1-20, wherein for a viscosity of the condiment after the emulsification step (iii) falls within the range of 340,000 - 420,000 mPa·s, preferably within the range of 360,000 - 400,000 mPa·s.
22. Method according to any one of clauses 1-21 wherein the process also includes the following step:
   (iv) pumping the condiment to a filling station and the filling of the condiment into a container, preferably a glass or plastic container.
23. Method according to clause 22, preferably according to clause 21 and 22, wherein the viscosity of the condiment in the container is within the range of 260,000 - 300,000 mPa·s, preferably within the range of 270,000-280,000 mPa·s, and more preferably within the range of 275,000-285,000 mPa·s.
24. Method according to clause 22 or 23, wherein the condiment is filled into the container in portion of 50-6000 grams, preferably a portion of 150-2000 grams.

## Claims

1. A method for preparing a condiment in the form of an oil-in-water emulsion comprising the following steps:
(i) combining at least:
a. water;
b. an emulsifier, preferably an emulsifier containing lecithin;
c. a vegetable oil containing soybean oil; and
d. optionally one or more ingredients chosen from a sweetener, table salt, an acidic component and mustard;
into a first mixture;
(ii) processing the first mixture into a pre-emulsion; and
(iii) emulsifying the pre-emulsion into the condiment;
wherein the temperature of the pre-emulsion at the start of the emulsification step (iii) is less than 14°C.

2. Method according to claim 1, wherein the processing of step (ii) is performed with a different device than the device with which the emulsification in step (iii) is performed.

3. Method according to claim 2, wherein processing step (ii) is performed with a pump.

4. Method according to any one of claims 1-3, preferably according to clause 2 or 3, wherein the emulsification of step (iii) is performed with a high-shear mixer or a colloid mill, preferably with a colloid mill.

5. Method according to claim 4, wherein the colloid mill has a conical rotor and conical stator, wherein the distance between the rotor and stator is set within the range of 0.25 - 1.2 mm and/or wherein the rotation speed is set within the range of 35-70 Hz, preferably within the range 45-60 Hz.

6. Method according to any any one of claims 1-5, wherein, using a Brookfield Ametek DV2T equipped with a Helipath^{™} standard T-bar D94 accessory measured at 18°C and at 2 rpm for 1 minute, the viscosity of the condiment after the emulsification step (iii) falls within the range of 340,000 - 420,000 mPa·s, preferably within the range of 360,000 - 400,000 mPa·s.

7. Method according to any any one of claims 1-6 wherein the method also includes the following step:
(11)pumping the condiment to a filling station and the filling of the condiment into a container, preferably a glass or plastic container.

8. Method according to claim 7, preferably according to claim 6 and 7, wherein, using a Brookfield Ametek DV2T equipped with a Helipath^{™} standard T-bar D94 accessory measured at 18°C and at 2 rpm for 1 minute, the viscosity of the condiment in the container falls within the range of 260,000 - 300,000 mPa·s, preferably within the range of 270,000 - 280,000 mPa·s, even more preferably within the range of 275,000-285,000 mPa·s.

9. Method according to any one of claims 1-8, wherein step (i) involves combining at least:
a. water;
b. lecithin;
c. soybean oil; and
d. a sweetener, table salt, an acidic component and optionally, mustard; preferably a sweetener, table salt, an acidic component and optionally, mustard; even more preferably saccharose, table salt, vinegar and optionally, mustard.

10. Method according to any one of claims 1-9 , wherein the condiment contains at least 65% by weight (based on the total quantity of the condiment) of soybean oil and at least 5% by weight (based on the total quantity of the condiment) of water.

11. Method according to any one of claims 1-10, wherein the emulsifier contains lecithin, and wherein the lecithin is added in the form of egg yolk, egg yolk powder or whole egg.

12. Method according to any one of claims 1-11 , wherein the condiment contains a total quantity of vinegar within the range of range of 1-5% by weight (based on the total quantity of the condiment), preferably at least 2-4.5% by weight (based on the total quantity of the condiment).

13. Method according to any one of claims 1-12, comprising one or more of the following steps:
• cooling of the vegetable oil, and/or
• cooling of the first mixture, and/or
• cooling of the pre-emulsion.

14. Method according to any one of claims 1-13, wherein the temperature of the pre-emulsion at the start of the emulsification step (iii) less than 13°C is.

15. Method according to any one of claims 1-14, wherein the temperature of the condiment at the end of the emulsification step (iii) is 2.5-5 °C higher than the temperature of the pre-emulsion at the start at the emulsification step (iii), preferably at least 3-4 °C higher.
